Europäisches Patentamt

European Patent Office

Office européen des brevets

(19)

(11) Numéro de publication: **0 204 607**
**B1**

(12) **FASCICULE DE BREVET EUROPEEN**

(45) Date de publication du fascicule du brevet:
**18.07.90**

(51) Int. Cl.⁵: **E04H 12/02, B29C 53/66**

(21) Numéro de dépôt: **86401075.6**

(22) Date de dépôt: **22.05.86**

(54) **Poteau en matière plastique pour supporter notamment des lignes électriques et dispositif pour réaliser un enroulement de fibres sur ce poteau.**

(30) Priorité: **28.05.85 FR 8507952**

(43) Date de publication de la demande:
**10.12.86 Bulletin 86/50**

(45) Mention de la délivrance du brevet:
**18.07.90 Bulletin 90/29**

(84) Etats contractants désignés:
**AT BE DE GB IT LU NL SE**

(56) Documents cités:
**DE-A- 1 937 973**
**DE-A- 3 039 140**
**DE-A- 3 039 141**
**FR-A- 1 507 323**
**FR-A- 2 219 289**

(73) Titulaire: **MANUFACTURE D'APPAREILLAGE ELECTRIQUE DE CAHORS, B.P.149 Regourd, F-46003 Cahors Cédex(FR)**

(72) Inventeur: **Bourrières, Pierre, 135 rue de la Barre, F-46000 Cahors(FR)**

(74) Mandataire: **Bouju, André, Cabinet Bouju 38 avenue de la Grande Armée, F-75017 Paris(FR)**

ACTORUM AG

**Description**

La présente invention concerne un poteau en matière plastique pour supporter notamment des lignes électriques, ce poteau étant renforcé par un enroulement de fibres, la densité de fibres de l'enroulement diminuant du bas vers le haut du poteau.

L'invention vise également un dispositif pour réaliser un enroulement de fibres sur le poteau précité.

On connaît des poteaux en matière plastique chargée de fibres de verre s'étendant dans la direction longitudinale du poteau. Ces poteaux présentent une section qui décroît du bas vers le haut du poteau en fonction du moment fléchissant qui apparaît typiquement dans de tels poteaux.

Ces poteaux sont ainsi généralement tronconiques.

On connaît également des poteaux électriques en matière plastique du genre précité, qui sont renforcés extérieurement par un enroulement de fibres. Dans les réalisations connues, cet enroulement de fibres est réalisé en amenant une nappe de fibres imprégnée de résine à l'état non polymérisé sur le poteau tronconique, suivant un certain angle par rapport à celui-ci, en faisant tourner le poteau autour de son axe et en déplaçant la nappe de fibres parallèlement à l'axe du poteau lors de la rotation de celui-ci, depuis le bas du poteau jusque vers le haut de ce dernier. Dans les réalisations connues, l'enroulement de fibres forme un pas constant sur toute la longueur du poteau, de sorte que la densité de fibres est répartie de façon régulière sur toute cette longueur.

Ces fibres sont solidement liées au poteau en matière plastique, par polymérisation de la résine qui enrobe ces fibres.

D'après la demande de brevet allemand 3 039 141 (VULKAN WERK), on connaît un poteau en matière plastique pour supporter notamment des lignes électriques, renforcé par un enroulement de fibres, la densité des fibres de l'enroulement diminuant progressivement du bas vers le haut du poteau. Toutefois, ce document enseigne un poteau constitué d'éléments de poteau assemblés bout à bout, l'enroulement de fibres étant essentiellement utilisé pour réaliser l'assemblage des éléments de poteau mis bout à bout. La densité diminue en gradins entre le pied et la tête du poteau, les différents enroulements ayant des longueurs différentes. L'angle d'enroulement d'une mèche de fibres est constant sur toute la longueur de l'enroulement correspondant, mais peut être différent de celui d'un autre enroulement.

Un tel poteau se prête difficilement à une fabrication en continu, et il faut une grande quantité de fibres pour lui donner la résistance voulue.

Par ailleurs, on connaît d'après le DE-A-3 039 140 un dispositif pour réaliser le poteau précité. Ce dispositif comprend des moyens pour amener une nappe de fibres imprégnée de résine à l'état non polymérisé sur le poteau, suivant un certain angle par rapport à un plan perpendiculaire à l'axe de celui-ci, des moyens pour faire tourner le poteau autour de son axe et des moyens pour déplacer la mèche de fibres parallèlement à l'axe du poteau, lors de la rotation de celui-ci, depuis la bas du poteau jusque vers le haut de ce dernier, l'angle d'enroulement d'une mèche étant constant sur toute la longueur de l'enroulement correspondant, mais pouvant être différent de celui d'un autre enroulement.

Ce dispositif permet uniquement une diminution en gradins de la densité d'enroulement.

Le but de la présente invention est de remédier aux inconvénients du poteau et du dispositif précités et de proposer une solution économique et efficace pour réaliser des poteaux en matière plastique renforcés extérieurement par un enroulement de fibres.

Suivant l'invention, le poteau en matière plastique pour supporter notamment des lignes électriques, renforcé par un enroulement de fibres, la densité de fibres de l'enroulement diminuant du bas vers le haut du poteau, est caractérisé en ce que ce poteau est réalisé d'une seule pièce par extrusion sous traction, en ce que la matière plastique du poteau est chargée de fibres s'étendant suivant la direction longitudinale de ce poteau, et en ce que l'angle de l'enroulement de fibres par rapport à un plan perpendiculaire à l'axe du poteau augmente progressivement du bas vers le haut du poteau.

Selon l'invention, on réalise d'abord de manière économiquement simple, par extrusion sous traction ou "pultrusion", qui est un procédé de fabrication en continu, un poteau cylindrique d'une seule pièce qui présente déjà une très bonne tenue mécanique dans le sens de la longueur.

L'augmentation progressive de l'angle de l'enroulement du bas vers le haut du poteau permet de réaliser un enroulement de renforcement de densité progressivement décroissante entre le bas et le haut du poteau, sur des machines automatiques permettant une production de masse et une grande productivité.

Il est également possible de régler la densité de fibres de l'enroulement sur toute la longueur du poteau, et donc d'optimiser cette densité de fibres.

Selon une version avantageuse de l'invention, le poteau comprend au moins deux couches superposées d'enroulement de fibres, l'angle de l'enroulement de fibres de la seconde couche étant inverse de l'angle de l'enroulement de fibres de la première couche.

Suivant un autre aspect de l'invention, le dispositif du type précité pour réaliser un enroulement de fibres est caractérisé en ce qu'il comprend des moyens pour amener simultanément sur le poteau plusieurs mèches parallèles de fibres et des moyens pour augmenter progressivement l'espacement entre ces mèches et l'angle d'enroulement de celles-ci par rapport à un plan perpendiculaire à l'axe du poteau lors du déplacement de ces mèches entre le bas et le haut du poteau.

Ce dispositif permet la fabrication en grandes séries de poteaux renforcés par un enroulement de fibres dont la densité peut être optimisée.

D'autres particularités et avantages de l'invention apparaîtront encore dans la description ci-après.

Aux dessins annexés, donnés à titre d'exemples non limitatifs :

- la figure 1 est une vue en élévation avec arrachements d'un poteau renforcé conforme à l'invention,

- la figure 2 est une vue schématique avec arrachements du poteau, illustrant la mise en œuvre. du renforcement de fibres, au moyen du dispositif conforme à l'invention,

- la figure 3 est une vue en perspective montrant une partie du dispositif conforme à l'invention,

- la figure 4 est une vue en plan d'une partie du dispositif, les parallélogrammes déformables de celui-ci étant dans leur position initiale, dans laquelle les mèches de fibres sont rapprochées très près les unes des autres,

- la figure 5 est une vue en plan analogue à la figure 4, les parallélogrammes déformables étant dans une position dilatée, dans laquelle les mèches de fibres sont espacées les unes des autres,

- la figure 6 est une vue en bout du dispositif montrant également le cylindre de support des mèches de fibres et le poteau,

- la figure 7 est une vue suivant la flèche F de la figure 6.

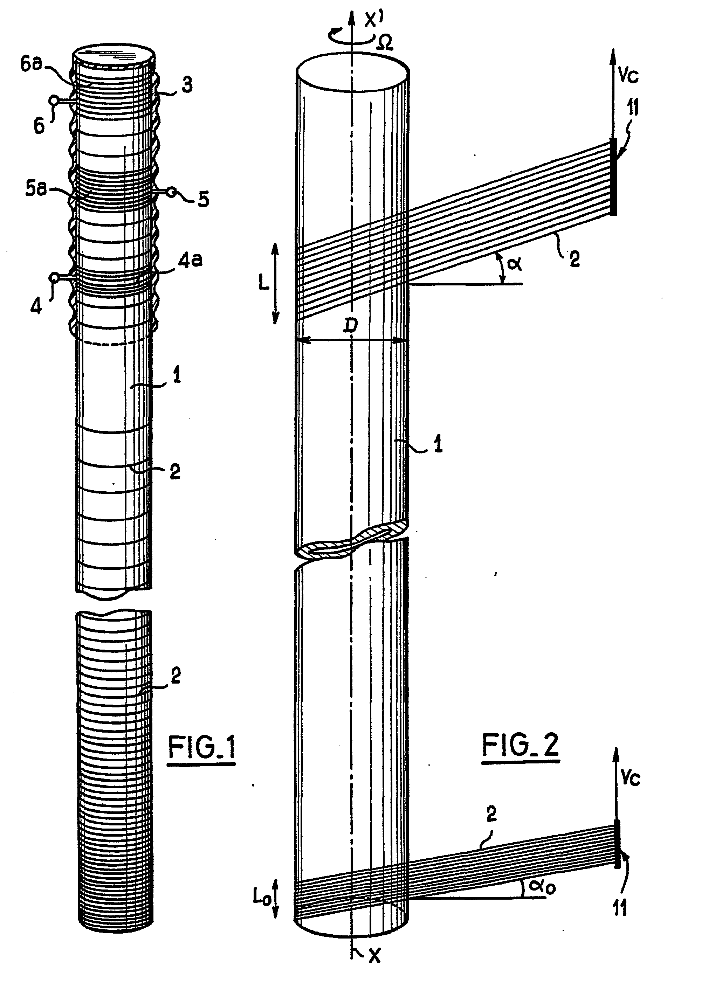

Dans la réalisation de la figure 1, le poteau 1 pour supporter des lignes électriques est en matière plastique chargée de fibres s'étendant longitudinalement dans ce poteau.

Ce poteau 1 est un tube cylindrique réalisé par exemple, par extrusion sous traction (pultrusion), renforcé extérieurement par un enroulement de fibres 2.

Conformément à l'invention, la densité de fibres de l'enroulement diminue progressivement du bas vers le haut du poteau 1, ce qui a pour effet de donner à ce poteau une forme légèrement tronconique.

La répartition de la densité des fibres est telle que le poteau présente une résistance à la flexion et au flambage maximale à sa base, cette résistance à la flexion diminuant progressivement vers le haut, comme dans le cas des poteaux tronconiques classiques.

Comme on le voit sur la figure 2, l'angle $\alpha_0$, $\alpha$ de l'enroulement de fibres 2 par rapport à un plan perpendiculaire à l'axe X-X' du poteau 1 augmente progressivement du bas vers le haut du poteau.

De préférence, le poteau cylindrique 1 est recouvert par au moins deux couches superposées d'enroulement de fibres 2, l'angle de l'enroulement de fibres de la seconde couche étant inverse de l'angle ($\alpha_0$, $\alpha$) de l'enroulement de fibres de la première couche.

Dans la réalisation de la figure 1, on voit également que la partie supérieure du poteau 1 est recouverte par un capuchon 3 en matière électriquement isolante, telle qu'une résine silicone, présentant une surface latérale ondulée qui comprend des supports 4, 5, 6 de fixation des lignes électriques. La partie du poteau 1 qui est recouverte par ce capuchon 3 présente au niveau des supports de lignes 4, 5, 6 des zones 4a, 5a, 6a dans lesquelles la densité de l'enroulement de fibres est plus importante que dans les zones comprises entre ces supports 4, 5, 6. De plus, la zone 6a la plus proche du sommet du poteau 1 est plus dense en fibres que les zones 5a et 4a qui sont plus éloignées de ce sommet.

On va maintenant décrire en référence aux figures 2 à 7, le dispositif conforme à l'invention pour réaliser un enroulement de fibres 2 sur le poteau cylindrique 1.

Ce dispositif comprend de façon en elle-même connue, des moyens pour amener une nappe constituée par des mèches de fibres 8, 9, 10, ... imprégnées de résine à l'état non polymérisé, sur l'une des extrémités du poteau 1, suivant un certain angle qui est au départ égal à $\alpha_0$. Le dispositif comporte en outre des moyens pour faire tourner le poteau 1 autour de son axe X-X', ainsi que des moyens 11 pour déplacer les mèches 8, 9, 10,... de fibres parallèlement à l'axe X-X' du poteau 1, lors de la rotation de celui-ci, depuis le bas du poteau jusque vers le haut de ce dernier.

Conformément à l'invention, le dispositif comprend des moyens pour amener plusieurs mèches 8, 9, 10, ... parallèles de fibres simultanément sur le poteau 1 et des moyens pour augmenter progressivement l'espacement entre ces mèches lors du déplacement de celles-ci entre le bas et le haut du poteau 1.

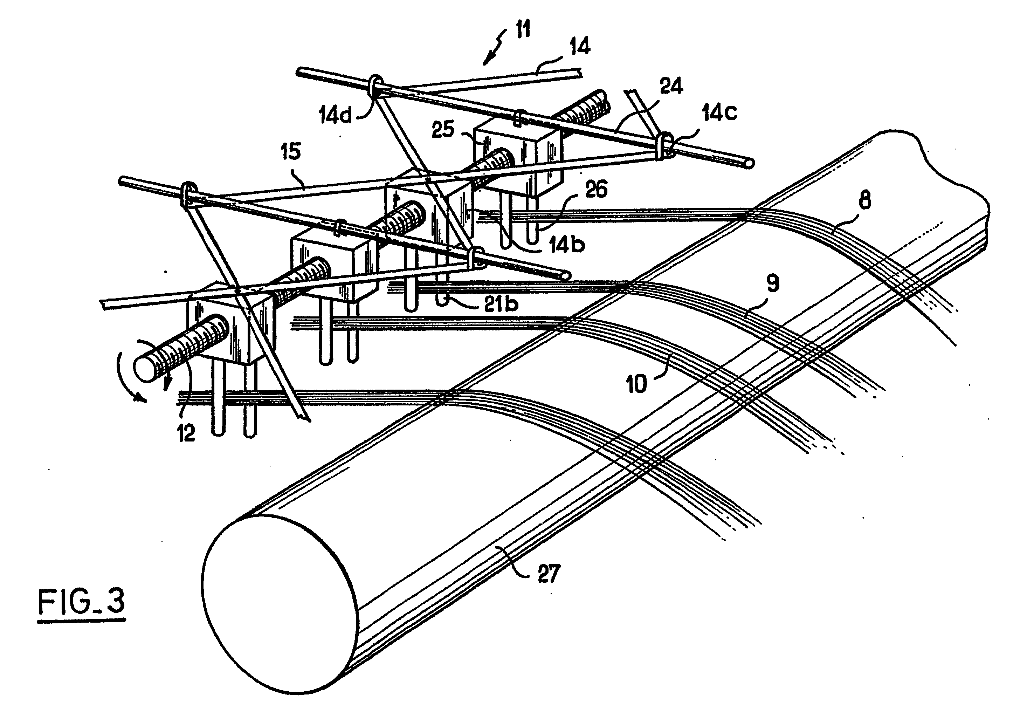

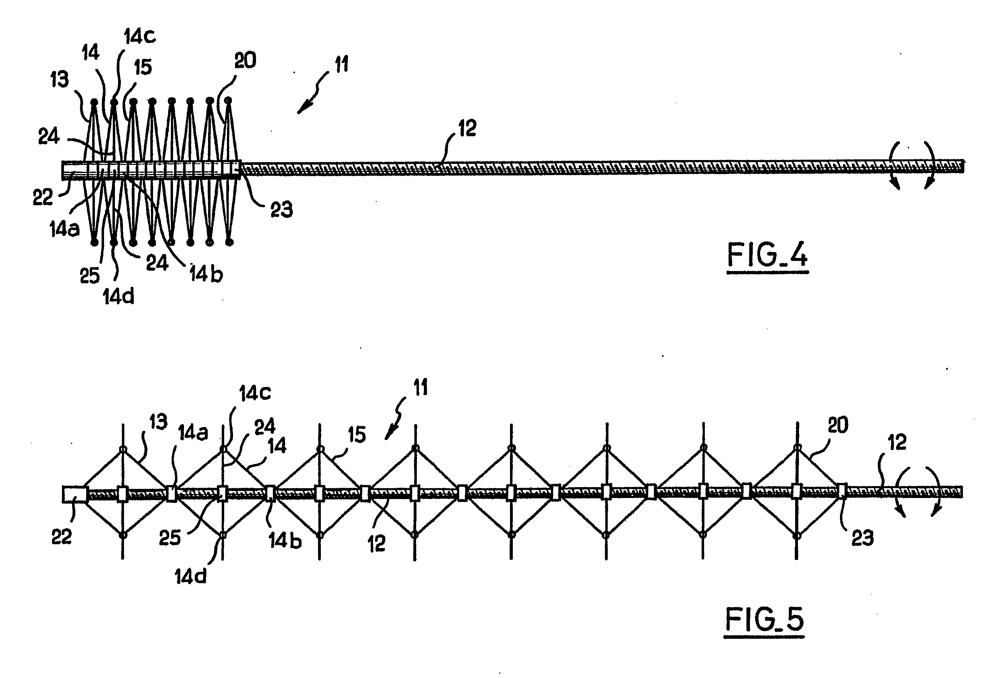

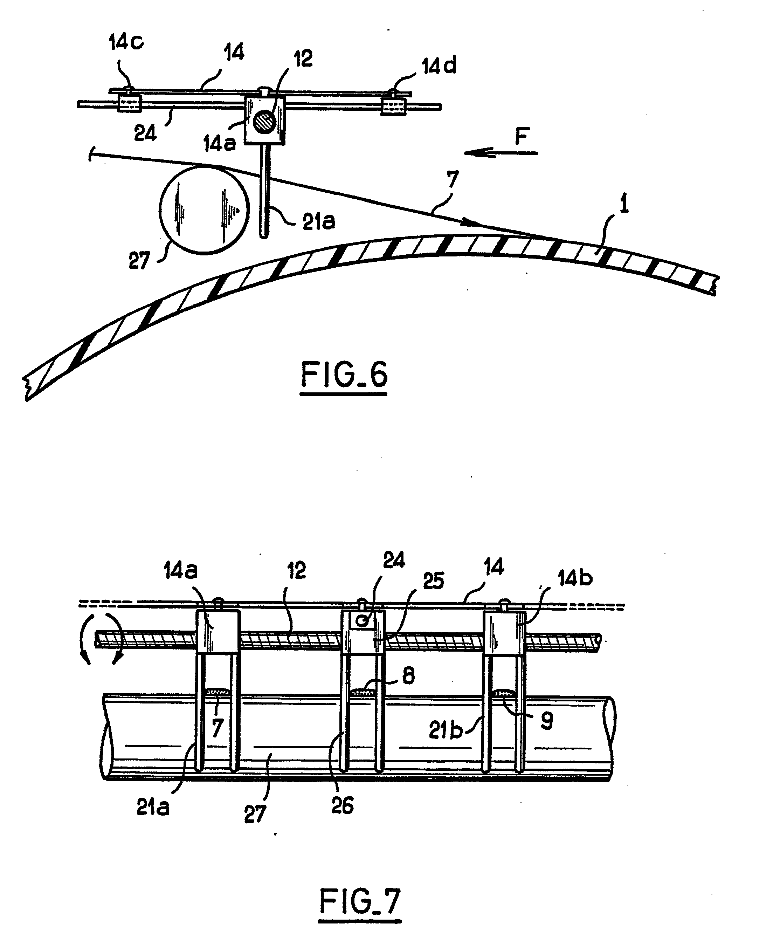

Comme on le voit sur les figures 3 à 7, lesdits moyens comprennent une tige filetée 12 montée en rotation suivant son axe et coopérant avec une série de parallélogrammes déformables 13, 14, 15, ... 20 (voir figures 4 et 5) reliés les uns aux autres et comportant sur deux de leurs sommets opposés un corps tel que 14a, 14b commun aux parallélogrammes voisins, monté coulissant sur la tige filetée 12. Chaque corps 14a, 14b comporte une fourche 21a, 21b pour guider le déplacement d'une mèche de fibres telle que 7 et 9 (voir figures 6 et 7). Le sommet du parallélogramme déformable 13 situé à l'une des extrémités de la tige filetée 12 qui est elle-même située près de la base du poteau 1 est solidaire d'un point fixe 22, tandis que le sommet du parallélogramme déformable 20, adjacent à l'autre extrémité de la tige filetée 12 est solidaire d'un corps 23 qui est engagé de manière vissante sur la tige filetée 12.

Par ailleurs, les deux autres sommets tels que 14c, 14d de chaque parallélogramme déformable tel que 14 sont reliés par une tige diagonale 24 qui est solidaire d'un corps 25 situé entre les deux corps 14a, 14b engagés sur l'axe de la tige filetée 12.

Le corps 25 est monté coulissant sur la tige filetée 12 et comporte une fourche de guidage 26 pour une autre mèche 8 de fibres (voir figure 7), située entre les mèches 7 et 9.

D'autre part, on voit sur les figures 3, 6 et 7 que les mèches de fibres telles que 7, 8, 9, avant d'être amenées sur le poteau 1, passent sur un cylindre 27 qui a pour effet d'aplatir les mèches de fibres sous forme de bandes d'épaisseur réduite.

Le fonctionnement du dispositif que l'on vient de décrire est le suivant:

Au départ, le dispositif 11 est dans la position représentée sur la figure 4, dans laquelle les corps tels que 14a, 25, 14b portant les fourches 21a, 26, 21b pour guider les mèches de fibres 7, 8, 9, ... sont accolés les uns aux autres, de sorte que les mèches de fibres 7, 8, 9, ... sont pratiquement jointives.

Ces mèches de fibres 7, 8, 9 guidées par les fourches 21a, 26, 21b et pré-imprégnées de résine à l'état non polymérisé, sont amenées sur l'extrémité du poteau 1 correspondant à sa base. L'ensemble des mèches 7, 8, 9, ... forme un angle $\alpha_0$ avec un plan perpendiculaire à l'axe X–X' du poteau 1 et recouvre une longueur égale à $L_0$ de celui-ci.

En faisant tourner le poteau 1 suivant son axe X–X', les mèches de fibres 7, 8, 9, ... s'enroulent autour du poteau 1 en même temps que le dispositif 11 de guidage des mèches de fibres est déplacé parallèlement à l'axe X–X' du poteau avec une vitesse $V_c$. Pendant ce déplacement, on fait tourner la tige filetée 12 du dispositif 11 de façon à déformer progressivement les parallélogrammes déformables 13, 14, 15, ... 20, ce qui a pour effet d'écarter progressivement les fourches 21a, 26, 21b de guidage des mèches de fibres telles que 7, 8, 9, ... On écarte ainsi progressivement les mèches de fibres les unes des autres et en même temps on augmente progressivement l'angle compris entre ces mèches de fibres et un plan perpendiculaire à l'axe du poteau 1. Ainsi, lorsque les mèches de fibres telles que 7, 8, 9 arrivent près du haut du poteau, l'ensemble des mèches de fibres guidées par le dispositif 11 forme avec un plan perpendiculaire à l'axe X–X' du poteau 1, un angle égal à $\alpha$ qui est supérieur à l'angle $\alpha_0$ initial et cet ensemble de fibres recouvre le poteau 1 suivant une longueur L qui est également supérieure à la longueur de recouvrement initiale $L_0$.

Après cette opération, on continue l'enroulement des fibres mais en sens inverse, c'est-à-dire du haut vers le bas du poteau 1. A cet effet, il est préférable de décaler le dispositif 11 suivant une longueur mesurée suivant l'axe X–X' correspondant approximativement à la largeur d'une mèche de fibres et on inverse l'angle $\alpha$ de façon que lors du retour du dispositif 11 vers la base du poteau, les mèches de fibres recouvrent les espaces vides subsistant entre les mèches enroulées lors du premier trajet et que ces mèches se croisent avec les précédentes.

On peut ainsi procéder à plusieurs trajets aller-retour successifs, avec au minimum un aller et un retour.

Par exemple, dans le cas d'un poteau à section intérieure circulaire et constante:

soit: $L_0$ la longueur initiale du dispositif 11 de guidage des nappes de fibres,

$\alpha_0$ l'angle initial de l'enroulement de fibres,

$X_0 = 0$, la position initiale du dispositif 11 par rapport à l'axe X–X' du poteau, et

$e_0$ l'épaisseur moyenne initiale de la nappe de fibres.

Soit : L la longueur du dispositif 11 lorsque celui-ci occupe une certaine position $\underline{x}$ par rapport à l'axe X–X' du poteau,

$\alpha$ l'angle de l'enroulement de fibres en cette position, et e l'épaisseur moyenne de la nappe de fibres dans cette dernière position.

Si l'on désire une juxtaposition des nappes de fibres sans chevauchement à chaque tour, on doit satisfaire les relations suivantes :

$$e = e_0 \frac{tg\,\alpha_0}{tg\,\alpha}$$

$$L = \pi D\,tg\,\alpha$$

D étant le diamètre du poteau.

Soit $\Omega$ la vitesse de rotation du poteau en rd/s, $V_c$ la vitesse d'avancement du dispositif 11; si l'on veut enrouler les nappes de fibres suivant un angle $\alpha$, on doit satisfaire la relation :

$$V_c = \Omega \frac{D}{2} tg\,\alpha$$

Dans la pratique, la différence entre l'angle initial $\alpha_0$ et l'angle final sera inférieure à 10°.

Bien entendu, le moteur entraînant en rotation la tige filetée 12 peut être piloté par un ordinateur de façon à commander la dilatation des parallélogrammes déformables 13, 14, 15, ... 20 à une vitesse constante ou variable, avec éventuellement des arrêts, en fonction de la répartition de la densité de fibres désirée en un point précis de la longueur du poteau 1.

Bien entendu, l'invention n'est pas limitée aux exemples de réalisation que l'on vient de décrire et on peut apporter à ceux-ci de nombreuses modifications sans sortir du cadre de l'invention défini par les revendications. Ainsi, le poteau peut avoir n'importe quelle section cylindrique.

Par ailleurs, l'invention peut s'appliquer à des poteaux autres que des poteaux électriques.

**Revendications**

1. Poteau (1) en matière plastique pour supporter notamment des lignes électriques, renforcé par un enroulement de fibres (2), la densité de fibres de l'enroulement (2) diminuant du bas vers le haut du poteau, caractérisé en ce que ce poteau est réalisé d'une seule pièce par extrusion sous traction, en ce que la matière plastique du poteau (1) est chargée de fibres s'étendant suivant la direction longitudinale de ce poteau, et en ce que l'angle ($\alpha$) de l'enroulement de fibres (2) par rapport à un plan perpendiculaire à l'axe X–X' du poteau (1) augmente progressivement du bas vers le haut du poteau.

2. Poteau conforme à la revendication 1, caractérisé en ce qu'il comprend au moins deux couches superposées d'enroulement de fibres (2), l'angle de l'enroulement de fibres de la seconde couche étant inverse de l'angle ($\alpha$) de l'enroulement de fibres (2) de la première couche.

3. Poteau conforme à l'une des revendications 1 ou 2, caractérisé en ce que sa partie supérieure est recouverte par un capuchon (3) en matière électriquement isolante qui comprend des supports (4, 5, 6) pour la fixation des lignes électriques et en ce que la partie du poteau qui est recouverte par ce capuchon (3) présente au niveau des supports de lignes (4, 5, 6) une densité d'enroulement de fibres qui est plus importante que dans les zones comprises entre ces supports.

4. Dispositif pour réaliser un enroulement de fibres sur un poteau cylindrique (1) conforme à l'une des revendications 1 à 3, comprenant des moyens pour amener une nappe de fibres imprégnée de résine à l'état non polymérisé sur le poteau (1), suivant un certain angle (α) par rapport à un plan perpendiculaire à l'axe de celui-ci, des moyens pour faire tourner le poteau (1) autour de son axe (X-X') et des moyens pour déplacer la mèche de fibres parallèlement à l'axe du poteau, lors de la rotation de celui-ci, depuis le bas du poteau jusque vers le haut de ce dernier, caractérisé en ce qu'il comprend des moyens (11) pour amener simultanément sur le poteau (1) plusieurs mèches (7, 8, 9) parallèles de fibres et des moyens (13, 14, 15, ... 20) pour augmenter progressivement l'espacement entre ces mèches et l'angle (α) d'enroulement de celles-ci par rapport à un plan perpendiculaire à l'axe du poteau (1) lors du déplacement de ces mèches entre le bas et le haut du poteau.

5. Dispositif conforme à la revendication 4, caractérisé en ce que lesdits moyens comprennent une tige filetée (12) montée en rotation et coopérant avec une série de parallélogrammes déformables (13, 14, 15, ... 20) comportant sur deux de leurs sommets opposés un corps (14a, 14b) monté coulissant sur la tige filetée, chaque corps comportant une fourche (21a, 21b) pour guider le déplacement d'une mèche de fibres (7, 9), le sommet du parallélogramme déformable (13) situé à l'une des extrémités de la tige filetée (12) étant solidaire d'un point fixe (22), tandis que le sommet du parallélogramme déformable (20) adjacent à l'autre extrémité de la tige filetée (12) est solidaire d'un corps (23) qui est engagé de manière vissante sur la tige filetée (12).

6. Dispositif conforme à la revendication 5, caractérisé en ce que les deux autres sommets (14c, 14d) de chaque parallélogramme déformable sont reliés par une tige diagonale (24) qui est solidaire d'un corps (25) situé entre les deux corps (14a, 14b) engagés sur la tige filetée (12), ce corps (25) étant monté coulissant sur cette tige filetée et comportant une fourche (26) de guidage pour une autre mèche (8) de fibres.

**Claims**

1. A post (1) made of plastics for supporting more particularly electric lines, said post being reinforced by a winding of fibres (2), the fibre density of the winding (2) decreasing in the upward direction of the post, characterised in that the post is made in one piece by extrusion under traction, in that the plastics material of the post (1) is filled with fibres extending in the longitudinal direction of said post, and in that the angle (α) of winding of the fibres (2) with respect to a plane perpendicular to the axis (X–X') of the post (1) increases progressively in the upward direction of the post.

2. A post according to claim 1, characterised in that it comprises at least two superposed layers of fibre winding, the angle of winding of the fibres of the second layer being the reverse of the angle (α) of winding of the fibres (2) of the first layer.

3. A post according to claim 1 or 2, characterised in that its top part is covered by a cap (3) of electrically insulating material which comprises supports (4, 5, 6) for fixing the electric lines and in that that part of the post which is covered by said cap (3) has, at the line supports (4, 5, 6), a fibre winding density which is greater than in the zones contained between said supports.

4. Apparatus for making a fibre winding on a cylindrical post (1) in accordance with any one of claims 1 to 3, comprising means for bringing a layer of fibres impregnated with resin in the nonpolymerised state on to the post (1) at a certain angle (α) with respect to a plane perpendicular to the axis thereof, means for rotating the post (1) about its axis (X–X') and means for moving the fibre strand parallel to the post axis during rotation of said post, from the bottom of the post to the top thereof, characterised in that it comprises means (11) for simultaneously bringing on to the post (1) a plurality of parallel fibre strands (7, 8, 9) and means (13, 14, 15, ... 20) for progressively increasing the spacing between said strands and the angle (α) of winding thereof with respect to a plane perpendicular to the axis of the post (1) during movement of said strands between the bottom and top of the post.

5. Apparatus according to claim 4, characterised in that the said means comprise a screwthreaded rod (12) mounted for rotation and co-operating with a series of deformable parallelograms (13, 14, 15, ... 20) having on two of their opposed vertices a member (14a, 14b) mounted slidably on said screwthreaded rod, each member comprising a fork (21a, 21b) for guiding the movement of a fibre strand (7, 9), the vertex of the deformable parallelogram (13) situated at one of the ends of the screwthreaded rod (12) being rigidly connected to a fixed point (22) whereas the vertex of the deformable parallelogram (20) adjacent the other end of the screwthreaded rod (12) is rigidly connected to a member (23) engaged screwthreadably on the screwthreaded rod (12).

6. Apparatus according to claim 5, characterised in that the other two vertices (14c, 14d) of each deformable parallelogram are connected by a diagonal rod (24) which is rigidly connected to a member (25) situated between the two members (14a, 14b) engaged on the screwthreaded rod (12), said member (25) being mounted slidably on said screwthreaded rod and comprising a guide fork (26) for another fibre strand (8).

**Patentansprüche**

1. Kunststoffmast (1) zum Tragen von insbesondere elektrischen Leitungen, der durch eine Faserwicklung (2) verstärkt ist, wobei die Dichte der Fasern der Wicklung (2) vom unteren Ende des Mastes zum oberen Ende desselben hin abnimmt, dadurch gekennzeichnet, daß dieser Mast einteilig durch Extrudieren unter Zugeinwirkung hergestellt ist, daß in den Kunststoff des Mastes (1) Fasern eingelagert sind, die sich in Längsrichtung dieses Mastes erstrecken, und daß der Winkel (α) der Faserwicklung (2) bezüglich einer zur Achse X-X' des Mastes (1) senkrechten Ebene progressiv vom unteren zum oberen Ende des Mastes hin zunimmt.

2. Mast nach Anspruch 1, dadurch gekennzeichnet, daß er wenigstens zwei einander überlagerte Schichten von Faserwicklungen (2) umfaßt, wobei der Winkel der Faserwicklung der zweiten Schicht entgegengesetzt zu dem Winkel (α) der Faserwicklung (2) der ersten Schicht ist.

3. Mast nach Anspruch 1 oder 2, dadurch gekennzeichnet, daß sein oberer Teil mit einer Haube (3) aus elektrisch isolierendem Material bedeckt ist, die Stützen (4, 5, 6) zur Befestigung von der elektrischen Leitungen aufweist, und daß derjenige Teil des Mastes, welcher durch diese Haube (3) bedeckt ist, auf Höhe der Leitungsstützen (4, 5, 6) eine Dichte der Faserwicklung aufweist, die größer als in den zwischen diesen Stützen liegenden Zonen ist.

4. Vorrichtung zur Herstellung einer Faserwicklung auf einem zylindrischen Mast (1) nach einem der Ansprüche 1 bis 3, mit Mitteln für die Zuführung eines mit einem Harz im nichtpolymerisierten Zustand imprägnierten Faserbandes auf den Mast (1) unter einem bestimmten Winkel (α) bezüglich einer zur Achse des Mastes senkrechten Ebene, Mitteln zur Drehung des Mastes (1) um seine Achse (X-X') und Mitteln zur Bewegung des Faserstranges parallel zur Achse des Mastes während dessen Drehung vom unteren Ende des Mastes bis zum oberen Ende desselben, dadurch gekennzeichnet, daß sie Mittel (11) umfaßt, um mehrere parallele Faserstränge (7, 8, 9) gleichzeitig auf den Mast (1) aufzubringen, sowie Mittel (13, 14, 15, ... 20) zur progressiven Vergrößerung des Abstandes zwischen diesen Strängen und des Wickelwinkels (α) derselben in bezug auf eine zur Achse des Mastes (1) senkrechte Ebene während der Bewegung dieser Stränge vom unteren zum oberen Ende des Mastes.

5. Vorrichtung nach Anspruch 4, dadurch gekennzeichnet, daß die genannten Mittel eine drehbeweglich gelagerte Gewindestange (12) umfassen, die mit einer Reihe von deformierbaren Parallelogrammen (13, 14, 15, ... 20) zusammenwirkt, die an zwei ihrer einander gegenüberliegenden Scheitel einen Körper (14a, 14b) aufweisen, der auf der Gewindestange verschiebbar gelagert ist, wobei jeder Körper eine Gabel (21a, 21b) umfaßt, um die Bewegung eines Faserstranges (7, 9) zu führen, und der Scheitel des an einem der Enden der Gewindestange (12) liegenden deformierbaren Parallelogrammes (13) mit einem festen Punkt (22) starr verbunden ist, während der Scheitel des an das andere Ende der Gewindestange (12) angrenzenden deformierbaren Parallelogrammes (20) starr mit einem Körper (23) verbunden ist, der mit der Gewindestange (12) in Schraubeingriff steht.

6. Vorrichtung nach Anspruch 5, dadurch gekennzeichnet, daß die beiden anderen Scheitel (14c, 14d) jedes deformierbaren Parallelogrammes über eine Diagonalstange (24) verbunden sind, welche starr mit einem Körper (25) verbunden ist, der zwischen den beiden auf der Gewindestange (12) aufsitzenden Körpern (14a, 14b) liegt, wobei dieser Körper (25) auf dieser Gewindestange verschiebbar gelagert ist und eine Führungsgabel (26) für einen weiteren Faserstrang (8) aufweist.

FIG.1

FIG.2

FIG_3

FIG_4

FIG_5

FIG_6

FIG_7